# EUROPÄISCHE PATENTSCHRIFT

(11) **EP 3 670 776 B1**
(45) Veröffentlichungstag und Bekanntmachung des Hinweises auf die Patenterteilung: **20.04.2022**
(21) Anmeldenummer: 18212903.1
(22) Anmeldetag: 17.12.2018
(51) Int. Cl.: E04B 1/35, E04B 1/16, E04B 2/68, B33Y 10/00

(54) **VERFAHREN ZUR HERSTELLUNG EINER WAND AUS BETON UND WAND EINES BAUWERKS AUS BETON**
METHOD FOR PRODUCING A WALL MADE OF CONCRETE AND CONCRETE WALL OF A STRUCTURE
PROCÉDÉ DE FABRICATION D'UNE PAROI EN BÉTON ET PAROI D'UNE CONSTRUCTION EN BÉTON

(43) Veröffentlichungstag der Anmeldung: 24.06.2020
(73) Patentinhaber: Ed. Züblin AG, 70567 Stuttgart (DE)
(72) Erfinder: Weber, Peter, 70563 Stuttgart (DE)
(74) Vertreter: Reinhardt, Annette

(56) Entgegenhaltungen:
- R.A. BUSWELL ET AL: "3D printing using concrete extrusion: A roadmap for research", CEMENT AND CONCRETE RESEARCH., Bd. 112, 1. Oktober 2018 (2018-10-01), Seiten 37-49, XP055587073, US ISSN: 0008-8846, DOI: 10.1016/j.cemconres.2018.05.006
- S. LIM ET AL: "Developments in construction-scale additive manufacturing processes", AUTOMATION IN CONSTRUCTION, Bd. 21, 1. Januar 2012 (2012-01-01), Seiten 262-268, XP055586873, AMSTERDAM, NL ISSN: 0926-5805, DOI: 10.1016/j.autcon.2011.06.010
- Viktor Mechtcherine ET AL: "3D-PRINTED STEEL REINFORCEMENT FOR DIGITAL CONCRETE CONSTRUCTION - MANUFACTURE, MECHANICAL PROPERTIES AND BOND BEHAVIOUR", , 1. Januar 2018 (2018-01-01), XP055587227, DOI: 10.13140/RG.2.2.33813.22248 Gefunden im Internet: URL:https://www.researchgate.net/publicati on/325448753_3D-printed_steel_reinforcemen t_for_digital_concrete_construction_-_Manu facture_mechanical_properties_and_bond_beh aviour/download
- BIRANCHI PANDA ET AL: "Additive manufacturing of geopolymer for sustainable built environment", JOURNAL OF CLEANER PRODUCTION, Bd. 167, 1. November 2017 (2017-11-01), Seiten 281-288, XP055586869, AMSTERDAM, NL ISSN: 0959-6526, DOI: 10.1016/j.jclepro.2017.08.165
- BOS FREEK ET AL: "3D Printing Concrete with Reinforcement", HIGH TECH CONCRETE: WHERE TECHNOLOGY AND ENGINEERING MEET: PROCEEDINGS OF THE 2017 FIB SYMPOSIUM, HELD IN MAASTRICHT, THE NETHERLANDS, JUNE 12-14, 2017, SPRINGER INTERNATIONAL PUBLISHING, CHAM , 12. Juni 2017 (2017-06-12), Seiten 2484-2493, XP009513013, DOI: 10.1007/978-3-319-59471-2_283 ISBN: 978-3-319-59471-2 Gefunden im Internet: URL:https://link.springer.com/chapter/10.1 007/978-3-319-59471-2_283 [gefunden am 2017-08-06]
- Sungwoo ; Lim ET AL: "Open Research Online How to cite: DEVELOPMENT OF A VIABLE CONCRETE PRINTING PROCESS", 28th International Symposium on Automation and Robotics in Construction (ISARC2011), 29 June 2011 (2011-06-29), pages 665-670, XP055745873, Retrieved from the Internet: URL:http://oro.open.ac.uk/37885/1/S20-3.pd f

## Beschreibung

Die Erfindung betrifft ein Verfahren zur Herstellung einer Wand eines Bauwerks aus Beton der im Oberbegriff des Anspruchs 1 angegebenen Gattung sowie eine Wand eines Bauwerks aus Beton der im Oberbegriff des Anspruchs 9 angegebenen Gattung.

Aus der CN 106193368 A ist ein Verfahren zur Herstellung eines Bauwerks aus Beton bekannt, bei dem zwei einander gegenüberliegende Wandteile durch Auftragen von Beton in übereinander liegenden Schichten hergestellt werden. Nach der Erstellung der beiden Wandteile wird vertikale Bewehrung in den Zwischenraum zwischen den Wandabschnitten eingebracht. Dieser Zwischenraum wird anschließend mit Beton verfüllt.

Wände, die durch Auftragen von Beton in übereinander liegenden Schichten ohne seitliche Schalung hergestellt werden, werden üblicherweise mittels eines sogenannten Druckkopfs, der sich über die oberste Schicht der Wand bewegt und eine weitere Schicht von Beton auf die Wand aufträgt, hergestellt. Dieses Verfahren wird auch als 3D-Druck von Beton bezeichnet. Die vertikale Bewehrung darf den Druckkopf nicht an seiner Bewegung über die oberste Schicht der Wand hindern. Es ist bekannt, den Druckkopf gegabelt auszuführen, so dass beidseitig von Bewehrung, beispielsweise von Bewehrungsmatten, Schichten von Beton aufgetragen werden können. Hierzu wird ein Druckkopf mit vergleichsweise aufwändigem Aufbau benötigt. Die maximale Höhe der Bewehrung ist durch die konstruktive Gestaltung des Druckkopfs begrenzt.

Aus dem Zeitschriftenartikel R. A. BUSWELL ET AL: "3D printing using concrete extrusion: A roadmap for research", CEMENT AND CONCRETE RESEARCH, Bd. 112, 1. Oktober 2018, S. 37-49 geht hervor, die Außenhülle einer Wand in übereinanderliegenden Schichten von Beton aufzutragen und die Bewehrung in dem Zwischenraum anzuordnen. Für die Bewehrung ist ein schraubenbasiertes System angegeben.

Aus dem Zeitschriftenartikel Lim, Sungwoo; Buswell, Richard; Lee, Thanh; Wackrow, Rene; Austin, Simon Austin; Gibb, Alistair and Thorpe, Toni (2011). Development of a viable concrete printing process. In: 28th International Symposium on Automation and Robotics in Construction (ISAR2011), 29 Jun - 2 Jul 2011, Seoul, South Korea, pp. 665-670 geht ein Betonbauteil, nämlich eine Bank hervor, dessen Außenhülle aus übereinanderliegenden Schichten von Beton hergestellt ist. Das Betonbauteil weist Öffnungen auf, durch die Bewehrungsstäbe ragen. Am sichtbaren Ende der Bewehrungsstäbe sind Stahlplatten für Bewehrungsstäbe mit Gewinde zur nachträglichen Vorspannung angeordnet.

Der Erfindung liegt die Aufgabe zugrunde, ein Verfahren zur Herstellung einer Wand eines Bauwerks aus Beton anzugeben, das ein einfaches Einbringen der vertikalen Bewehrung erlaubt. Eine weitere Aufgabe der Erfindung besteht darin, eine Wand eines Bauwerks aus Beton mit Bewehrung anzugeben, die in einem automatisierten Verfahren herstellbar ist.

Diese Aufgabe wird bezüglich des Verfahrens durch ein Verfahren mit den Merkmalen des Anspruchs 1 gelöst. Bezüglich der Wand wird die Aufgabe durch eine Wand mit den Merkmalen des Anspruchs 9 gelöst.

Das Verfahren zur Herstellung der Wand sieht vor, dass nach dem Auftragen und zumindest teilweisem Erstarren zumindest eines Teils der Schichten mindestens ein Bewehrungsstab in die Wand eingeschraubt wird, der zumindest diesen Teil der Schichten durchragt. Das Einschrauben des Bewehrungsstabs in die Wand ermöglicht eine Einbringung des Bewehrungsstabs auch in bereits teilweise erstarrte Schichten. Dadurch ist es möglich, zunächst eine Vielzahl von Schichten aufzutragen und erst anschließend einen diese Schichten durchragenden Bewehrungsstab einzubringen. Eine spezielle Anpassung des Druckkopfs ist nicht erforderlich. Dadurch, dass der Bewehrungsstab erst dann eingeschraubt wird, wenn bereits ein Teil der Schichten zumindest teilweise erstarrt ist, ist es nicht notwendig, den mindestens einen Bewehrungsstab jeweils unmittelbar nach dem Auftragen einer Schicht in diese Schicht einzubringen. Dadurch kann die Länge des Bewehrungsstabs vergleichsweise groß gewählt werden, so dass auch bei hohen Wänden nur vergleichsweise wenige Bewehrungsstäbe benötigt werden. Dadurch kann die Anzahl von Überlappungsstößen oder Verbindungen von Bewehrungsstäben gering gehalten werden.

Vorteilhaft wird der Bewehrungsstab vor der vollständigen Erstarrung des Betons der Schichten in die Schichten eingeschraubt. Bevorzugt ist keine der Schichten, in die der Bewehrungsstab eingeschraubt wird, beim Einschrauben des Bewehrungsstabs vollständig erstarrt. Dadurch können die zum Einschrauben des Bewehrungsstabs benötigten Kräfte vergleichsweise gering gehalten werden.

Bevorzugt wird der Bewehrungsstab automatisiert eingeschraubt. Vorteilhaft wird die Wand vollständig automatisiert hergestellt. Das Auftragen der Schichten erfolgt im 3D-Druckverfahren üblicherweise automatisiert. Wird auch der mindestens eine Bewehrungsstab automatisiert eingeschraubt, so kann die Wand vollständig automatisiert hergestellt werden. Dadurch ist eine wirtschaftliche Herstellung der Wand möglich. Fehler bei der Herstellung der Wand, die beispielsweise durch nicht sachgemäßes Einbringen von Bewehrungen entstehen können, werden vermieden. Vorteilhaft wird der Bewehrungsstab mittels eines hydraulischen, pneumatischen oder elektrischen Antriebs eingeschraubt. Auch eine andere Art von Antrieb kann jedoch vorteilhaft sein.

Vorteilhaft weist der Bewehrungsstab mindestens eine Erhebung an seinem Umfang auf. Es ist bekannt, Bewehrungsstäbe mit Rippen zu versehen, die die Kraftübertragung zwischen Bewehrungsstab und umgebendem Beton verbessern. Diese Rippen werden üblicherweise auf gegenüberliegenden Seiten des Bewehrungsstabs mit entgegengesetzter Neigungsrichtung hergestellt. Es ist vorgesehen, dass alle Erhebungen des Bewehrungsstabs ein Schraubgewinde bilden. Dadurch ist ein einfaches Einschrauben des Bewehrungsstabs in die Wand möglich. Vorschub und Drehgeschwindigkeit beim Einschrauben des Bewehrungsstabs werden dabei vorteilhaft auf die Steigung des Schraubgewindes abgestimmt. Alle Erhebungen des Bewehrungsstabs weisen dabei vorteilhaft die gleiche Steigung und Wendelrichtung auf, so dass das Einschrauben des Bewehrungsstabs unter Nutzung der Erhebungen als Gewinde einfach möglich ist.

Es kann vorgesehen sein, dass vor dem Einschrauben des Bewehrungsstabs zunächst ein Kanal in die Wand eingebracht wird, dessen Durchmesser kleiner als der Durchmesser des Bewehrungsstabs ist, und dass in den Kanal dann der Bewehrungsstab eingeschraubt wird. Durch den Kanal wird die Kraft, die zum Einschrauben des Bewehrungsstabs benötigt wird, verringert. Bevorzugt ist vorgesehen, dass der Bewehrungsstab eine Schraubspitze aufweist. Mit der Schraubspitze wird der Bewehrungsstab vorteilhaft unmittelbar in das Vollmaterial der Schichten eingeschraubt. Dadurch wird der Herstellprozess vereinfacht. Ist der Beton noch nicht vollständig erstarrt, so kann der Beton mit vergleichsweise geringem Kraftaufwand von der Schraubspitze und dem Bewehrungsstab verdrängt werden.

Der Bewehrungsstab ist vorteilhaft Teil einer vertikalen Bewehrung. Der Bewehrungsstab wird vorteilhaft in einem Winkel von weniger als 30° zur Vertikalen, insbesondere in einem Winkel von weniger als 10° zur Vertikalen, vorzugsweise im Rahmen der Fertigungstoleranzen vertikal eingeschraubt.

Das schichtweise Aufbringen des Betons erfolgt vorzugsweise in einer Längsrichtung der Wand. Die Wand weist mindestens eine Querseite auf, die quer zu der Längsrichtung verläuft. Vorteilhaft sind mehrere Bewehrungsstäbe in unterschiedlichem horizontalem Abstand zueinander in der Wand angeordnet. Die Bewehrungsstäbe sind dabei vorzugsweise benachbart zu den Querseiten und benachbart zu Wandöffnungen wie Türöffnungen oder Fensteröffnungen mit geringem Abstand zueinander angeordnet. In Bereichen, die zu den Querseiten oder zu Wandöffhungen einen großen Abstand aufweisen, kann die vertikale Bewehrung entfallen oder die vertikalen Bewehrungsstäbe können mit großem Abstand zueinander angeordnet werden. Die Bewehrung ist demnach angepasst an die auftretenden Belastungen in der Wand angeordnet. Die Bewehrung ist vorteilhaft in Form einer Zonenbewehrung vorgesehen. Zonenbewehrung ist dabei Bewehrung, die lediglich lokal oder bereichsweise in einem ansonsten unbewehrten Bauteil angeordnet ist.

Die einzelnen Schichten der Wand besitzen eine vergleichsweise geringe Dicke. Vorteilhaft wird jede Schicht mit einer Dicke von 2 cm bis 10 cm hergestellt. Bevorzugt ist die Dicke aller Schichten der Wand dabei im Rahmen der Fertigungstoleranzen gleich. Die Schichten werden insbesondere mit einer Dicke von etwa 4 cm bis etwa 8 cm, bevorzugt mit einer Dicke von etwa 5 cm hergestellt.

Für eine Wand eines Bauwerks aus Beton, die aus übereinander angeordneten Schichten von Beton aufgebaut ist, wobei die Wand mindestens einen Bewehrungsstab aufweist, der zumindest einen Teil der Schichten durchragt, ist vorgesehen, dass der mindestens eine Bewehrungsstab zumindest eine Erhebung an seinem Umfang aufweist, wobei alle Erhebungen des Bewehrungsstabs ein Schraubgewinde bilden. Das Schraubgewinde kann dazu genutzt werden, den Bewehrungsstab nach dem zumindest teilweisen Erstarren der Schichten in die Schichten einzuschrauben. Dadurch kann die Wand einfach und automatisiert hergestellt werden. Die Erhebungen werden entsprechend den bei Bewehrungsstäben bekannten Rippen im Einbauzustand genutzt, um Kräfte zwischen Bewehrungsstab und umgebendem Beton zu übertragen. Vorteilhaft sind alle Erhebungen als wendelförmige Erhebungen mit der gleichen Neigungsrichtung und der gleichen Steigung ausgebildet. Dadurch, dass alle Erhebungen des Bewehrungsstabs wendelförmig mit der gleichen Neigungsrichtung und der gleichen Steigung ausgebildet sind, können die wendelförmigen Erhebungen als Gewinde zum Einschrauben des Bewehrungsstabs in die Wand bei der Herstellung der Wand genutzt werden.

Vorteilhaft weist der mindestens eine Bewehrungsstab an seinem unten liegenden Ende eine Schraubspitze auf. Mit der Schraubspitze kann der Bewehrungsstab bei der Herstellung der Wand nach Art einer selbstschneidenden Schraube unmittelbar in das Vollmaterial des Betons eingedreht werden. Vorzugsweise weist die Schraubspitze ein Gewinde auf, dessen Steigung der Steigung des Schraubgewindes des anschließenden Abschnitts des Bewehrungsstabs entspricht. In vorteilhafter Gestaltung ist die Schraubspitze einteilig mit dem Bewehrungsstab ausgebildet. Die Schraubspitze kann beispielsweise bei der Herstellung des Bewehrungsstabs durch Drehen oder plastisches Verformen eines Endes des Bewehrungsstabs hergestellt werden. In vorteilhafter alternativer Gestaltung kann die Schraubspitze separat von dem Bewehrungsstab ausgebildet und an dem Bewehrungsstab befestigt sein. Die Befestigung der Schraubspitze an dem Bewehrungsstab kann beispielsweise über eine Schraubverbindung oder eine Schweißverbindung erfolgen. Auch eine Befestigung mittels Klebstoff kann vorteilhaft sein. Wird die Schraubspitze separat von dem Bewehrungsstab ausgebildet, so kann die Schraubspitze wirtschaftlich hergestellt werden. Es ist insbesondere möglich, ein anderes, beispielsweise ein härteres Material für die Schraubspitze vorzusehen als für den Grundkörper des Bewehrungsstabs.

Vorteilhaft weist die Wand mindestens zwei Bewehrungsstäbe auf, die einen Überlappungsstoß bilden. Dadurch, dass sich die Bewehrungsstäbe in Längsrichtung überlappen, ist eine Verbindung der Bewehrungsstäbe, beispielsweise über Schraubmuffen oder dergleichen, nicht notwendig. Dadurch können die Bewehrungsstäbe getrennt voneinander in die Schichten des Betons eingedreht werden. Vorteilhaft wird ein erster Bewehrungsstab eingedreht, wenn die Höhe der Wand näherungsweise der Länge des Bewehrungsstabs entspricht. Anschließend können weitere Schichten von Beton aufgetragen werden. Entspricht die Höhe der Wand näherungsweise der Länge von zwei Bewehrungsstäben abzüglich der gewünschten Überlappungslänge, so kann der zweite Bewehrungsstab in die Wand eingedreht werden. Anschließend können weitere Schichten von Beton aufgetragen werden. Entsprechend können weitere Bewehrungsstäbe nach Auftragen weiterer Schichten eingeschraubt werden. Dadurch ist die Herstellung der Wand einfach und automatisiert möglich.

Ein Ausführungsbeispiel der Erfindung wird im Folgenden anhand der Zeichnung erläutert. Es zeigen:
- Fig. 1: eine schematische perspektivische Darstellung einer Wand,
- Fig. 2: die Einzelheit II aus Fig. 1 in vergrößerter Darstellung,
- Fig. 3: eine schematische Seitenansicht der Wand aus Fig. 1 mit einem zweiten Bewehrungsstab.

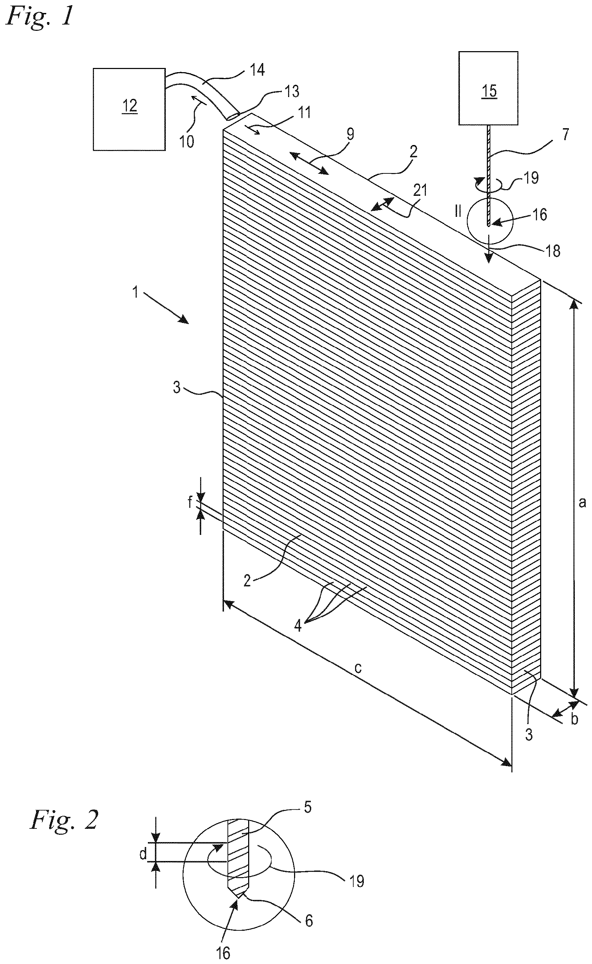

Fig. 1 zeigt schematisch eine Wand 1 eines Bauwerks. Das Bauwerk kann beispielsweise ein Gebäude wie ein Wohnhaus oder dergleichen sein. Die Wand 1 ist aus einer Vielzahl übereinander liegender Schichten 4 von Beton hergestellt. Zur Herstellung der Wand 1 kommt eine schematisch dargestellte Betonauftragseinrichtung 12 zum Einsatz, die über eine Bewegungs- und Zuführeinrichtung 14 mit einer Betonaustrittsöffnung 13 verbunden ist. Die Betonauftragseinrichtung 12 ist eine sogenannte 3D-Druckeinrichtung für Beton. Die Betonaustrittsöffnung 13 wird auch als Druckkopf bezeichnet. Die konstruktive Gestaltung kann eine beliebige geeignete Gestaltung sein. Im Stand der Technik sind beispielsweise Betonauftragseinrichtungen 12 in Form von Portalanordnungen oder Betonauftragseinrichtungen 12 mit einem Roboterarm bekannt.

Die Wand 1 besitzt zwei einander gegenüberliegende Längsseiten 2, die parallel zu einer Längsrichtung 9 der Wand 1 verlaufen. Im Ausführungsbeispiel ist die Wand 1 eben. Die Wand 1 kann jedoch auch eine geschwungene, abgewinkelte oder in sonstiger Weise von der geraden Form abweichende Form aufweisen. Die Längsrichtung 9 ist die Richtung, in der die Betonaustrittsöffnung 13 zur Herstellung einer Schicht 4 über die Wand 1 zu bewegen ist. Die Wand 1 weist zwei Querseiten 3 auf, die sich jeweils quer, insbesondere zur Längsrichtung 9 in einer Querrichtung 21 erstrecken.

Die Betonaustrittsöffnung 13 kann mittels der Bewegungs- und Zuführeinrichtung 14 in einer Auftragsrichtung 10 und/oder einer entgegengesetzt gerichteten Auftragsrichtung 11 zum Auftragen einer Schicht 4 über die Oberseite des bisher hergestellten Wandabschnitts der Wand 1 bewegt werden. Die Auftragsrichtungen 10 und 11 verlaufen in Längsrichtung 9 der Wand 1. Auch ein Auftragen von Beton in Querrichtung 21 kann vorgesehen sein.

Die Wand 1 besitzt eine Höhe a, die üblicherweise mehrere Meter beträgt. Die Höhe a kann beispielsweise der Raumhöhe eines Bauwerks, von dem die Wand 1 einen Teil bildet, entsprechen. Die Wand 1 besitzt eine Breite b, die deutlich geringer als die Höhe a ist. Die Breite b kann beispielsweise im Bereich von 20 cm bis 50 cm liegen. Die Wand 1 besitzt eine Länge c, die in Längsrichtung 9 gemessen ist. Die Wand 1 besteht aus einer Vielzahl von übereinander liegenden Schichten 4. Jede der Schichten 4 weist eine Dicke f auf, die beispielsweise 2 cm bis 10 cm, insbesondere 4 cm bis 8 cm, bevorzugt etwa 5 cm betragen kann. Die Wand 1 wird ohne Verwendung einer Schalung an den Längsseiten 2 hergestellt. Die Schichten 4 erstrecken sich über mindestens die Hälfte, vorteilhaft über mindestens 75 % der Länge c der Wand 1 über die gesamte Breite b der Wand 1 von der einen Längsseite 2 zur gegenüberliegenden Längsseite 2. Die Schichten 4 bilden eine massive Wand 1. Die Dicke f aller Schichten 4 ist so bemessen, dass der Beton der jeweils obersten Schicht 4 nicht seitlich von der darunter liegenden Schicht 4 herunterläuft. Die einzelnen Schichten 4 wölben sich jedoch aufgrund des Eigengewichts des Betons jeweils nach außen, so dass die Außenseite der Wand 1 nicht wie in Fig. 1 schematisiert dargestellt eine glatte Oberfläche, sondern eine wellige Oberfläche ist.

Bei konventionell hergestellten Wänden wird zunächst eine Schalung hergestellt, und in der Schalung werden horizontale und vertikale Bewehrungen, beispielsweise Bewehrungsmatten oder dergleichen angeordnet. Anschließend wird die Schalung mit Beton ausgegossen. Wie Fig. 1 zeigt, erstreckt sich die Betonaustrittsöffnung 13 an der Oberseite der Wand 1. Eine so gestaltete Betonaustrittsöffnung 13 kann sich nicht ohne weiteres über einen über die oberste Schicht 4 hinaus nach oben ragenden Bewehrungsstab 7 bewegen. Bei der in Fig. 1 dargestellten Wand 1 ist daher vorgesehen, den mindestens einen Bewehrungsstab 7 nach dem Auftragen und zumindest teilweisen Erstarren zumindest eines Teils der Schichten 4 in diese Schichten 4 der Wand 1 einzuschrauben. Der Bewehrungsstab 7 wird dabei so eingeschraubt, dass er zumindest einen Teil der Schichten 4 durchragt. Im Ausführungsbeispiel ist vorgesehen, dass zunächst etwa 20 bis 100 Schichten 4 hergestellt werden. Die untersten dieser Schichten 4 erstarren bereits teilweise, während die oberen Schichten 4 noch aufzutragen sind. Nach dem Auftragen der Vielzahl von Schichten 4 ist vorgesehen, den Bewehrungsstab 7 in den Beton einzuschrauben. Der Bewehrungsstab 7 wird dabei vorteilhaft eingeschraubt, bevor der Beton aller Schichten 4, in die der Bewehrungsstab 7 einzuschrauben ist, vollständig erstarrt ist. Bevorzugt ist keine der Schichten 4, in die der Bewehrungsstab 7 einzuschrauben ist, vollständig erstarrt, wenn der Bewehrungsstab 7 eingeschraubt wird.

In Fig. 1 ist lediglich ein einziger Bewehrungsstab 7 gezeigt. Es kann jedoch eine Vielzahl von Bewehrungsstäben 7 in die Wand 1 eingeschraubt werden. Die Bewehrungsstäbe 7 werden vorteilhaft benachbart zu den Querseiten 3 und zu Wandöffnungen wie Türöffnungen oder Fensteröffnungen eingeschraubt. In vergleichsweise großem Abstand zu Querseiten 3 und Wand- und Fensteröffnungen sind vorteilhaft keine Bewehrungsstäbe 7 vorgesehen. Die Wand 1 weist demnach eine Zonenbewehrung auf. Die Bewehrungsstäbe 7 werden unter einem Winkel von höchstens 30°, insbesondere unter einem Winkel von höchstens 10° eingeschraubt. Bevorzugt werden die Bewehrungsstäbe 7 im Rahmen der Fertigungstoleranzen vertikal eingeschraubt. Die Bewehrungsstäbe 7 bilden demnach eine vertikale Bewehrung.

Beim Einschrauben wird der Bewehrungsstab 7 gedreht und gleichzeitig in seiner Längsrichtung bewegt. Hierzu wird der Bewehrungsstab 7 mit einem Vorschub 18 bewegt und einer Drehgeschwindigkeit 19 gedreht, wie in Fig. 1 durch Pfeile schematisch angedeutet ist. Die Drehbewegung und die Vorschubbewegung werden vorteilhaft von einem Antrieb 15 automatisiert ausgeführt. Der Antrieb 15 ist dabei bevorzugt ein hydraulischer, pneumatischer oder elektrischer Antrieb.

Fig. 2 zeigt das im Einbauzustand unten liegende Ende 16 des Bewehrungsstabs 7 in vergrößerter Darstellung. Wie Fig. 2 zeigt, weist der Bewehrungsstab 7 an seinem Außenumfang eine Erhebung 5 auf. Die Erhebung 5 ist im Ausführungsbeispiel als Rippe ausgebildet. Die Erhebung 5 ist wendelförmig ausgebildet und verläuft als Gewinde am Außenumfang des Bewehrungsstabs 7. Die Erhebung 5 des Bewehrungsstabs 7 bildet ein Schraubgewinde. Das Schraubgewinde kann sich auch aus mehreren Erhebungen 5 zusammensetzen. Beispielsweise können Erhebungen 5 an gegenüberliegenden Längsseiten des Bewehrungsstabs 7 vorgesehen sein, die durch gegenüberliegende Bereiche ohne Erhebung voneinander getrennt sind. Im Ausführungsbeispiel ist der Bewehrungsstab 7 an seinem Ende 16 (Fig. 1) mit einer Schraubspitze 6 versehen. Das Ende 16 ist dabei das im Einbauzustand unten liegende Ende des Bewehrungsstabs 7. An der Schraubspitze 6 verringert sich der Durchmesser des Bewehrungsstabs 7. Die Erhebung 5 erstreckt sich auch an der Schraubspitze 6 wendelförmig. Auch die Schraubspitze 6 weist demnach ein Schraubgewinde auf. Die Schraubspitze 6 kann am Bewehrungsstab 7 ausgebildet sein, beispielsweise durch Abdrehen oder Fräsen des Endes 16 des Bewehrungsstabs 7 oder durch plastische Umformung des Endes 16 des Bewehrungsstabs 7. Alternativ kann vorgesehen sein, dass die Schraubspitze 6 separat, insbesondere aus einem anderen Material hergestellt und mit dem Grundkörper des Bewehrungsstabs 7 verbunden wird. Die Schraubspitze 6 kann beispielsweise am Grundkörper des Bewehrungsstabs 7 aufgeschraubt oder durch Schweißen oder Kleben mit diesem verbunden werden.

Wie Fig. 2 zeigt, besitzt die Erhebung 5 eine Steigung d. Neben der wendelförmigen Erhebung 5 sind keine weiteren Erhebungen am Bewehrungsstab 7 vorgesehen, so dass die Schraubbewegung des Bewehrungsstabs 7 nicht behindert wird. Die Erhebung 5 des Bewehrungsstabs 7 bildet ein Schraubgewinde 20. Der Vorschub 18 und die Drehgeschwindigkeit 19, mit denen der Bewehrungsstab 7 wie in Fig. 1 schematisch dargestellt beim Einschrauben bewegt wird, sind auf die Steigung d des Schraubgewindes 20 abgestimmt. Im Ausführungsbeispiel ist vorgesehen, dass der Bewehrungsstab 7 unmittelbar in das Vollmaterial der Wand 1 eingeschraubt wird. Alternativ kann auch vorgesehen sein, zunächst einen Kanal in die Wand 1 einzubringen, dessen Durchmesser kleiner als der Außendurchmesser des Bewehrungsstabs 7 ist, und den mindestens einen Bewehrungsstab 7 in den Kanal einzuschrauben.

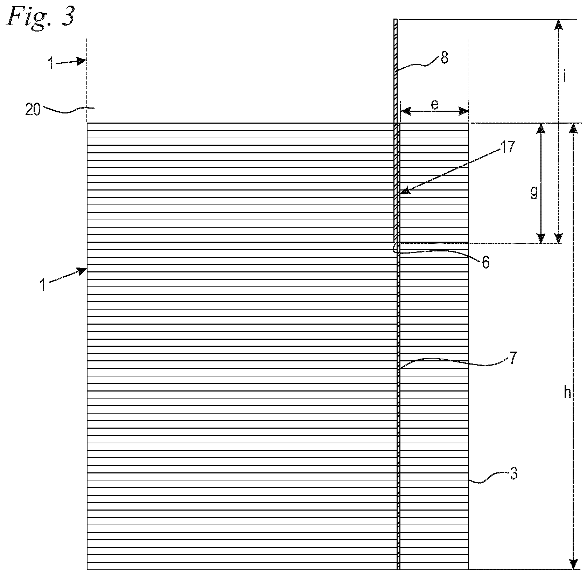

Fig. 3 zeigt die Wand 1 mit einem weiteren Bewehrungsstab 8. Der Bewehrungsstab 7 ragt, wie Fig. 3 zeigt, bis etwa an die Oberseite der Wand 1. Die Länge h des Bewehrungsstabs 7 entspricht etwa der Höhe a der Wand 1 (Fig. 1). An der Oberseite der Wand 1 ist in Fig. 3 schematisch und mit gestrichelter Linie eine an der Oberseite der Wand 1 angeordnete Deckenplatte 22 und darüber eine weitere Wand 1 dargestellt. Für die oberhalb der Deckenplatte 22 angeordnete Wand 1 ist ein zweiter Bewehrungsstab 8 vorgesehen, der über die untere Wand 1 und die Deckenplatte 22 hinausragt. Der Bewehrungsstab 8 weist eine Länge i auf, die im Ausführungsbeispiel kleiner als die Länge h ist. Die Länge i kann jedoch auch größer oder gleich groß wie die Länge h sein. Die Bewehrungsstäbe 7 und 8 überlappen sich und bilden einen Überlappungsstoß 17. Der Überlappungsstoß 17 erstreckt sich über eine Überlappungslänge g, die nach statischen Anforderungen geeignet gewählt wird.

Wie Fig. 3 zeigt, besitzen die Bewehrungsstäbe 7, 8 im Ausführungsbeispiel zur Querseite 3 einen vergleichsweise kleinen Abstand e. Dadurch können Zugbelastungen, die insbesondere im Bereich der Querseiten 3 der Wand 1 auftreten, gut aufgenommen werden. Auch an Wandöffnungen wie Öffnungen für Fenster oder Türen wird vorteilhaft ein Bewehrungsstab 7 angeordnet, der zu der benachbarten Öffnungen einen kleinen Abstand e aufweist. Der Abstand e beträgt vorzugsweise mindestens 3 cm, so dass an der Querseite 3 eine Mindestwanddicke von 3 cm zwischen Bewehrungsstab 7, 8 und Querseite 3 eingehalten ist.

## Patentansprüche

1. Verfahren zur Herstellung einer Wand eines Bauwerks aus Beton, wobei die Wand (1) durch Auftragen von Beton in übereinanderliegenden Schichten (4) ohne seitliche Schalung hergestellt wird,
**dadurch gekennzeichnet, dass** nach dem Auftragen und zumindest teilweisem Erstarren zumindest eines Teils der Schichten (4) mindestens ein Bewehrungsstab (7, 8) in die Wand (1) eingeschraubt wird, der zumindest diesen Teil der Schichten (4) durchragt.

2. Verfahren nach Anspruch 1,
**dadurch gekennzeichnet, dass** der Bewehrungsstab (7, 8) vor der vollständigen Aushärtung des Betons der Schichten (4) in die Schichten (4) eingeschraubt wird.

3. Verfahren nach Anspruch 1 oder 2,
**dadurch gekennzeichnet, dass** der Bewehrungsstab (7, 8) automatisiert eingeschraubt wird.

4. Verfahren nach Anspruch 3,
**dadurch gekennzeichnet, dass** der Bewehrungsstab (7, 8) mittels eines hydraulischen, pneumatischen oder elektrischen Antriebs (15) eingeschraubt wird.

5. Verfahren nach Anspruch 3 oder 4,
**dadurch gekennzeichnet, dass** der Bewehrungsstab (7, 8) mindestens eine Erhebung (5) an seinem Umfang aufweist, wobei alle Erhebungen (5) des Bewehrungsstabs (7, 8) ein Schraubgewinde bilden, und wobei Vorschub (18) und Drehgeschwindigkeit (19) beim Einschrauben des Bewehrungsstabs (7, 8) auf die Steigung (d) des Schraubgewindes (20) abgestimmt werden.

6. Verfahren nach einem der Ansprüche 1 bis 5,
**dadurch gekennzeichnet, dass** der Bewehrungsstab (7) eine Schraubspitze (6) aufweist, mit der der Bewehrungsstab (7) unmittelbar in das Vollmaterial der Schichten (4) eingeschraubt wird.

7. Verfahren nach einem der Ansprüche 1 bis 6,
**dadurch gekennzeichnet, dass** der Bewehrungsstab (7) in einem Winkel von weniger als 30° zur Vertikalen, insbesondere in einem Winkel von weniger als 10° zur Vertikalen, vorzugsweise vertikal eingeschraubt wird.

8. Verfahren nach einem der Ansprüche 1 bis 7,
**dadurch gekennzeichnet, dass** jede Schicht (4) mit einer Dicke (f) von 2 cm bis 10 cm hergestellt wird.

9. Wand eines Bauwerks aus Beton, wobei die Wand (1) aus übereinander angeordneten Schichten (4) von Beton aufgebaut ist, wobei die Wand (1) mindestens einen Bewehrungsstab (7, 8) aufweist, der zumindest einen Teil der Schichten (4) durchragt,
**dadurch gekennzeichnet,**
**dass** der mindestens eine Bewehrungsstab (7, 8) mehrere Erhebungen (5) an seinem Umfang aufweist, wobei alle Erhebungen des Bewehrungsstabs (7, 8) ein Schraubgewinde (20) bilden und dass die Erhebungen (5) entsprechend den bei Bewehrungsstäben bekannten Rippen im Einbauzustand genutzt werden, um Kräfte zwischen Bewehrungsstab (7, 8) und umgebendem Beton zu übertragen oder
**dass** der mindestens eine Bewehrungsstab (7, 8) eine Erhebung (5) an seinem Umfang aufweist, die als Rippe und wendelförmig ausgebildet ist und ein Schraubgewinde (20) bildet und dass die Erhebung (5) entsprechend den bei Bewehrungsstäben bekannten Rippen im Einbauzustand genutzt wird, um Kräfte zwischen Bewehrungsstab (7, 8) und umgebendem Beton zu übertragen.

10. Wand nach Anspruch 9,
**dadurch gekennzeichnet, dass** der mindestens eine Bewehrungsstab (7, 8) an seinem untenliegenden Ende (16) eine Schraubspitze (6) aufweist.

11. Wand nach Anspruch 10,
**dadurch gekennzeichnet, dass** die Schraubspitze (6) einteilig mit dem Bewehrungsstab (7, 8) ausgebildet ist.

12. Wand nach Anspruch 10,
**dadurch gekennzeichnet, dass** die Schraubspitze (6) separat von dem Bewehrungsstab (7, 8) ausgebildet und an dem Bewehrungsstab (7, 8) befestigt ist.

13. Wand nach einem der Ansprüche 9 bis 12,
**dadurch gekennzeichnet, dass** die Wand (1) mindestens zwei Bewehrungsstäbe (7, 8) aufweist, die einen Überlappungsstoß (17) bilden.

## Claims

1. Method for producing a wall of a structure made of concrete, wherein the wall (1) is produced without lateral formwork by applying concrete in layers (4) lying over one another,
**characterized in that**, after the application and at least partial setting of at least part of the layers (4), at least one reinforcing bar (7, 8) is screwed into the wall (1) and projects through at least this part of the layers (4).

2. Method according to Claim 1,
**characterized in that**, before the complete curing of the concrete of the layers (4), the reinforcing bar (7, 8) is screwed into the layers (4).

3. Method according to Claim 1 or 2,
**characterized in that** the reinforcing bar (7, 8) is screwed in in an automated manner.

4. Method according to Claim 3,
**characterized in that** the reinforcing bar (7, 8) is screwed in by means of a hydraulic, pneumatic or electric drive (15).

5. Method according to Claim 3 or 4,
**characterized in that** the reinforcing bar (7, 8) has at least one elevation (5) on its circumference, wherein all the elevations (5) of the reinforcing bar (7, 8) form a screw thread, and wherein the advance (18) and rotational speed (19) when screwing in the reinforcing bar (7, 8) are tailored to the pitch (d) of the screw thread (20).

6. Method according to one of Claims 1 to 5,
**characterized in that** the reinforcing bar (7) has a screw tip (6) by means of which of which the reinforcing bar (7) is screwed directly into the solid material of the layers (4).

7. Method according to one of Claims 1 to 6,
**characterized in that** the reinforcing bar (7) is screwed in at an angle of less than 30° to the vertical, in particular at an angle of less than 10° to the vertical, preferably vertically.

8. Method according to one of Claims 1 to 7,
**characterized in that** each layer (4) is produced with a thickness (f) of from 2 cm to 10 cm.

9. Wall of a structure made of concrete, wherein the wall (1) is built up from layers (4) of concrete which are arranged above one another, wherein the wall (1) has at least one reinforcing bar (7, 8) which projects through at least part of the layers (4),
**characterized**
**in that** the at least one reinforcing bar (7, 8) has a plurality of elevations (5) on its circumference, wherein all the elevations of the reinforcing bar (7, 8) form a screw thread (20), and in that, in a corresponding manner to the ribs known in the case of reinforcing bars, the elevations (5) are used in the installed state to transmit forces between the reinforcing bar (7, 8) and the surrounding concrete, or
**in that** the at least one reinforcing bar (7, 8) has an elevation (5) on its circumference that is formed as a rib and helically and forms a screw thread (20), and in that, in a corresponding manner to the ribs known in the case of reinforcing bars, the elevation (5) is used in the installed state to transmit forces between the reinforcing bar (7, 8) and the surrounding concrete.

10. Wall according to Claim 9,
**characterized in that** the at least one reinforcing bar (7, 8) has a screw tip (6) on its lower end (16).

11. Wall according to Claim 10,
**characterized in that** the screw tip (6) is formed in one piece with the reinforcing bar (7, 8).

12. Wall according to Claim 10,
**characterized in that** the screw tip (6) is formed separately from the reinforcing bar (7, 8) and is fastened to the reinforcing bar (7, 8).

13. Wall according to one of Claims 9 to 12,
**characterized in that** the wall (1) has at least two reinforcing bars (7, 8) which form an overlapping joint (17).

## Revendications

1. Procédé de fabrication d'une paroi d'une construction en béton, la paroi (1) étant fabriquée par application de béton en couches superposées (4) sans coffrage latéral,
**caractérisé en ce qu'**après l'application et la solidification au moins partielle d'au moins une partie des couches (4), au moins une barre d'armature (7, 8) est vissée dans la paroi (1), qui traverse au moins cette partie des couches (4).

2. Procédé selon la revendication 1, **caractérisé en ce que** la barre d'armature (7, 8) est vissée dans les couches (4) avant le durcissement complet du béton des couches (4).

3. Procédé selon la revendication 1 ou 2, **caractérisé en ce que** la barre d'armature (7, 8) est vissée de manière automatisée.

4. Procédé selon la revendication 3, **caractérisé en ce que** la barre d'armature (7, 8) est vissée au moyen d'un entraînement hydraulique, pneumatique ou électrique (15).

5. Procédé selon la revendication 3 ou 4, **caractérisé en ce que** la barre d'armature (7, 8) présente au moins un relief (5) sur sa périphérie, tous les reliefs (5) de la barre d'armature (7, 8) formant un filet de vis, et l'avancement (18) et la vitesse de rotation (19) lors du vissage de la barre d'armature (7, 8) étant adaptés au pas (d) du filet de vis (20).

6. Procédé selon l'une quelconque des revendications 1 à 5, **caractérisé en ce que** la barre d'armature (7) présente une pointe de vis (6), avec laquelle la barre d'armature (7) est vissée directement dans le matériau plein des couches (4).

7. Procédé selon l'une quelconque des revendications 1 à 6, **caractérisé en ce que** la barre d'armature (7) est vissée selon un angle de moins de 30° par rapport à la verticale, notamment selon un angle de moins de 10° par rapport à la verticale, de préférence verticalement.

8. Procédé selon l'une quelconque des revendications 1 à 7, **caractérisé en ce que** chaque couche (4) est fabriquée avec une épaisseur (f) de 2 cm à 10 cm.

9. Paroi d'une construction en béton, la paroi (1) étant construite à partir de couches (4) de béton agencées les unes sur les autres, la paroi (1) présentant au moins une barre d'armature (7, 8) qui traverse au moins une partie des couches (4), **caractérisée en ce que**
l'au moins une barre d'armature (7, 8) présente plusieurs reliefs (5) sur sa périphérie, tous les reliefs de la barre d'armature (7, 8) formant un filet de vis (20), et **en ce que** les reliefs (5) sont utilisés à l'état monté, conformément aux nervures connues pour les barres d'armature, pour transmettre des forces entre la barre d'armature (7, 8) et le béton environnant,
ou
**en ce que** l'au moins une barre d'armature (7, 8) présente un relief (5) sur sa périphérie, qui est configuré en tant que nervure et sous forme hélicoïdale et qui forme un filet de vis (20), et **en ce que** le relief (5) est utilisé à l'état monté, conformément aux nervures connues pour les barres d'armature, pour transmettre des forces entre la barre d'armature (7, 8) et le béton environnant.

10. Paroi selon la revendication 9, **caractérisée en ce que** l'au moins une barre d'armature (7, 8) présente une pointe de vis (6) à son extrémité inférieure (16).

11. Paroi selon la revendication 10, **caractérisée en ce que** la pointe de vis (6) est configurée d'une seule pièce avec la barre d'armature (7, 8).

12. Paroi selon la revendication 10, **caractérisée en ce que** la pointe de vis (6) est configurée séparément de la barre d'armature (7, 8) et est fixée à la barre d'armature (7, 8).

13. Paroi selon l'une quelconque des revendications 9 à 12, **caractérisée en ce que** la paroi (1) présente au moins deux barres d'armature (7, 8), qui forment un joint à chevauchement (17).
